# EUROPÄISCHE PATENTSCHRIFT

(11) **EP 3 724 531 B1**
(45) Veröffentlichungstag und Bekanntmachung des Hinweises auf die Patenterteilung: **06.10.2021**
(21) Anmeldenummer: 17829951.7
(22) Anmeldetag: 13.12.2017
(51) Int. Cl.: F16D 48/06

(54) **VERFAHREN ZUM BETRIEB EINER KUPPLUNGSEINRICHTUNG**
METHOD FOR OPERATING A CLUTCH DEVICE
PROCÉDÉ PERMETTANT DE FAIRE FONCTIONNER UN DISPOSITIF D'EMBRAYAGE

(43) Veröffentlichungstag der Anmeldung: 21.10.2020
(73) Patentinhaber: GKN Automotive Ltd., West Midlands, B37 7YE (GB)
(72) Erfinder: FITZ, Rudolf, 53844 Troisdorf (DE); ESCH, Eric Rene, 53879 Euskirchen (DE)
(74) Vertreter: karo IP
(86) Internationale Anmeldenummer: PCT/EP2017/082570
(87) Internationale Veröffentlichungsnummer: WO 2019/114941

(56) Entgegenhaltungen:
- DE-A1-102007 002 343
- DE-A1-102007 021 302
- DE-A1-102010 052 819
- US-A1- 2012 158 264

## Beschreibung

Die vorliegende Erfindung betrifft ein Verfahren zum Betrieb einer Kupplungseinrichtung, insbesondere für eine Lamellenkupplung, bevorzugt für eine Kupplung, die an einer Seitenwelle eines Kraftfahrzeuges angeordnet ist, so dass durch das Schließen von einer Kupplung der Kupplungseinrichtung die ganze Achse (hier wird die Kupplungseinrichtung als Booster bezeichnet) oder durch das Schließen jeweils einer Kupplung von zwei Kupplungen der Kupplungseinrichtung nur ein Rad (hier wird die Kupplungseinrichtung auch als Twinster® bezeichnet) des Kraftfahrzeuges mit einer Antriebseinheit des Kraftfahrzeuges drehmomentübertragend verbunden wird. Die Kupplungseinrichtung umfasst zumindest eine Mehrzahl von miteinander in Reibkontakt stehenden Kupplungslamellen sowie ein die Kupplungseinrichtung steuerndes Steuergerät.

Bei in Kraftfahrzeugen eingesetzten Sperrdifferentialen (hier als Kupplungseinrichtung) kann bei Anforderung zur Übertragung eines Soll-Moments über die Kupplungseinrichtung ein tatsächlich übertragendes Ist-Moment (nur) geschätzt werden. Die Schätzung basiert auf einer Kennlinie, die den Kisspoint enthält und damit die Charakteristik der Kupplungseinrichtung beschreibt. Der so genannte "Kisspoint" kann als Greifpunkt bezeichnet werden; einem Zustand der Kupplungseinrichtung bzw. der einander den Reibkontakt ausbildenden Kupplungslamellen (einer Kupplung der Kupplungseinrichtung), bei dem gerade ein Drehmoment von einer Antriebswelle über die Kupplungslamellen auf eine Abtriebswelle übertragen wird. Diese Kennlinie kann an einem Prüfstand anhand einer repräsentativen Kupplungseinrichtung unter der Berücksichtigung von Temperatur und Reibkoeffizienten ermittelt und im Steuergerät hinterlegt werden. Während einer Betriebszeit der in einem Kraftfahrzeug verbauten Kupplungseinrichtung verschleißen die Kupplungslamellen und der Reibkoeffizient ändert sich. Dadurch verschiebt sich die Kennlinie und das tatsächlich übertragende Ist-Moment weicht von dem Soll-Moment ab. Um dem entgegenzuwirken, wird entweder nach einer festgelegten Laufleistung oder nach einem festgelegten Energieeintrag eine (Nachlauf-)Kalibrierung ausgeführt. Die Kalibrierung kompensiert den Verschleiß und hebt den Kisspoint an (bzw. gleicht den Wegunterschied aus, den die Lamellen zum Erreichen des Kisppoints zurückzulegen haben), um die Abweichung zwischen Soll-Moment und Ist-Moment (weitgehend) auszugleichen.

Aus der DE 10 2007 002 343 A1 ist ein Verfahren zur dynamischen Ermittlung eines Kupplungsruhepunktes bekannt. Dabei soll eine ereignisabhängige Kalibrierung durchgeführt werden.

Es besteht ein ständiges Bedürfnis den Betrieb von Kupplungseinrichtungen zu verbessern und insbesondere zu allen Zeitpunkten in der Betriebszeit einer Kupplungseinrichtung eine hohe Übereinstimmung von Ist-Moment und Soll-Moment zu gewährleisten.

Hiervon ausgehend ist es Aufgabe der vorliegenden Erfindung, die im Zusammenhang mit dem Stand der Technik geschilderten Probleme wenigstens teilweise zu lösen. Es soll insbesondere ein Verfahren zum Betrieb einer Kupplungseinrichtung vorgeschlagen werden, durch das zu allen Zeitpunkten in der Betriebszeit einer Kupplungseinrichtung eine hohe Übereinstimmung von Ist-Moment und Soll-Moment gewährleistet werden kann.

Hierzu trägt ein Verfahren gemäß den Merkmalen des Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zum Betrieb einer Kupplungseinrichtung vorgeschlagen, wobei die Kupplungseinrichtung zumindest eine Mehrzahl von miteinander in Reibkontakt stehenden Kupplungslamellen sowie ein die Kupplungseinrichtung steuerndes Steuergerät aufweist, wobei die Kupplungseinrichtung während einer Betriebszeit der Kupplungseinrichtung mehrmals kalibriert wird. Das Verfahren umfasst zumindest die folgenden Schritte:
a) Durchführen einer ersten Kalibrierung zu einem ersten Zeitpunkt und Durchführen einer auf die erste Kalibrierung folgenden zweiten Kalibrierung zu einem zweiten Zeitpunkt, wobei der erste Zeitpunkt und der zweite Zeitpunkt in einer ersten Betriebszeit der Kupplungseinrichtung liegen und innerhalb eines ersten Intervalls erfolgen; und
b) Durchführen mindestens einer dritten Kalibrierung in einer späteren zweiten Betriebszeit zu einem dritten Zeitpunkt, wobei eine zu der dritten Kalibrierung vorhergehende Kalibrierung innerhalb eines zweiten Intervalls mit dem dritten Zeitpunkt erfolgt;
wobei die Intervalle in Abhängigkeit von einer Laufleistung eines Kraftfahrzeugs oder einem Energieeintrag in die Kupplungseinrichtung durch das Steuergerät bestimmt werden, wobei das erste Intervall kürzer ist als das zweite Intervall.

Das Verfahren ist insbesondere darauf gerichtet, ein Setzverhalten der Kupplungslamellen in einer ersten Betriebszeit zu berücksichtigen. Insbesondere bei Karbonlamellen ist beobachtet worden, dass in einer ersten Betriebszeit (beginnend mit einer Inbetriebnahme der Kupplungseinrichtung und ausgehend von einem Neuzustand der Kupplungslamellen) ein ausgeprägtes Setzverhalten erfolgt. Dabei verändert sich der Kisspoint bzw. der Weg, um den ein Aktuator der Kupplungseinrichtung die Kupplungslamellen zum Schließen der Kupplungseinrichtung zueinander hin verlagern muss, in besonders starkem Maße. Infolge des Setzverhaltens konnten gegenüber konventioneller Kalibrierung der Kupplungseinrichtung Abweichungen von Soll-Moment zu Ist-Moment von bis zu 30 % festgestellt werden.

Vorliegend wird vorgeschlagen, die Kalibrierung (bzw. davon erfasste Kalibrierprozesse) in einer ersten Betriebszeit (also beginnend mit einer Inbetriebnahme der Kupplungseinrichtung und ausgehend von einem Neuzustand der Kupplungslamellen) anders, insbesondere mit einer erhöhten Wiederholfrequenz, auszuführen als eine Kalibrierung in einer sich an die erste Betriebszeit anschließenden zweiten Betriebszeit.

Eine Kalibrierung umfasst insbesondere die Betätigung der Kupplungseinrichtung, wobei z. B. die Kupplungslamellen einer Kupplung der Kupplungseinrichtung von einer geöffneten Stellung der Kupplung hin zum Kisspoint verlagert werden. Der Kisspoint kann durch das Steuergerät erkannt werden, da hier über die Kupplungslamellen ein (geringes) Drehmoment übertragen wird.

Die Kalibrierung verändert die Lage des Kisspoints, so dass ein Aktuator der Kupplungseinrichtung die Kupplungslamellen um einen sich (von der sich veränderten Lage des Kisspoints abhängigen) ändernden Weg verlagern muss, um ein vorbestimmtes Drehmoment zu übertragen. Dabei soll eine möglichst geringe Abweichung von Soll-Moment zu Ist-Moment auftreten.

Die in der ersten Betriebszeit durchgeführte Kalibrierung wird insbesondere in Kalibrierprozessen nach festgelegten ersten Intervallen durchgeführt. Dabei werden die Intervalle (ausschließlich) in Abhängigkeit von einer Laufleistung des Kraftfahrzeugs (also gefahrene Kilometer des Kraftfahrzeugs bzw. der Kupplungseinrichtung, in dessen Antriebsstrang die Kupplungseinrichtung verbaut ist) oder (ausschließlich) in Abhängigkeit von einem Energieeintrag in die Kupplungseinrichtung bestimmt.

Das erste Intervall ist (zeitlich) kürzer bzw. kleiner als das zweite Intervall, d. h. insbesondere, dass wenn (für einen Vergleich der Intervalle) für beide Intervalle der gleiche Maßstab angesetzt wird bzw. werden würde (also Ermittlung beider Intervalle in gleicher Abhängigkeit entweder von der Laufleistung oder von dem Energieeintrag), das erste Intervall kleiner ist als das zweite Intervall.

Der Energieeintrag [Kilojoule] ist insbesondere die über die Zeit aufintegrierte Leistung [Watt], die über die Kupplungseinrichtung (von einer Antriebswelle auf eine Abtriebswelle) und über die Kupplungslamellen übertragen wird. Der Energieeintrag kann z. B. über die während der Betriebszeit übertragenen (Antriebs-)Drehmomente und ggf. zusätzlich anhand der Drehzahlen von Antriebswelle und Abtriebswelle ermittelt werden. Über die Antriebswelle wird insbesondere ein Drehmoment der Antriebseinheit des Kraftfahrzeuges auf die Kupplungseinrichtung übertragen, wobei über die Abtriebswelle ein Drehmoment von der Kupplungseinrichtung hin zu (mindestens oder genau) einem Rad des Kraftfahrzeuges weitergeleitet wird.

Insbesondere wird das erste Intervall in Abhängigkeit von dem Energieeintrag und das zweite Intervall in Abhängigkeit von der Laufleistung bestimmt.

Bevorzugt werden in der ersten Betriebszeit liegende erste Intervalle in Abhängigkeit von dem Energieeintrag bestimmt und betragen weniger als 30 kJ [Kilojoule], insbesondere weniger als 20 kJ, bevorzugt höchstens 10 kJ. In jedem Fall betragen die ersten Intervalle mindestens 2 kJ, bevorzugt mindestens 5 kJ.

Das zweite Intervall kann in Abhängigkeit von dem Energieeintrag bestimmbar sein (obwohl es ggf. im Rahmen der Kalibrierung in Abhängigkeit von der Laufleistung bestimmt wird), wobei das zweite Intervall mindestens 50 kJ [Kilojoule] beträgt, insbesondere mindestens 80 kJ, bevorzugt mindestens 100 kJ. Insbesondere beträgt das zweite Intervall höchstens 500 kJ.

Gemäß einer Ausgestaltung wird das Verfahren bei Kupplungseinrichtungen durchgeführt, bei denen die Mehrzahl von Kupplungslamellen durch Karbonlamellen gebildet ist.

Insbesondere wird zumindest in der ersten Betriebszeit bei einer Anforderung zur Übertragung eines Soll-Moments über die Kupplungseinrichtung ein Ist-Moment mit einer Abweichung gegenüber dem Soll-Moment von höchstens 10 % übertragen, bevorzugt mit einer Abweichung von höchstens 5 %.

Gemäß einer Ausgestaltung wird das, zumindest während der ersten Betriebszeit auftretende, Setzverhalten der Kupplungseinrichtung bzw. einer repräsentativen Kupplungseinrichtung in einem Versuchsfeld (einer Versuchseinrichtung) ermittelt durch Aufprägung von Energieeinträgen und Ermittlung des sich in Abhängigkeit von dem Energieeintrag ändernden Kisspoints der Kupplungseinrichtung. Der so ermittelte Zusammenhang von Energieeintrag und Kisspoint ist in dem Steuergerät (der in dem Kraftfahrzeug verbauten Kupplungseinrichtung gleichen Typs) hinterlegt. Der während des Betriebs der (im Kraftfahrzeug verbauten) Kupplungseinrichtung (mit Kupplungslamellen zunächst im Neuzustand) erfolgende Energieeintrag wird durch das Steuergerät ermittelt und zumindest das erste Intervall wird in Abhängigkeit von dem ermittelten Energieeintrag durch das Steuergerät bestimmt.

Insbesondere erfolgt, wenn ein erstes Intervall oder ein zweites Intervall überschritten wird, eine Kalibrierung unmittelbar nach einem Neustart einer Antriebseinheit (Verbrennungskraftmaschine oder elektrische Maschine oder beides, etc.) eines Kraftfahrzeuges.

Insbesondere erfolgt, wenn ein erstes Intervall oder ein zweites Intervall überschritten wird, eine Kalibrierung während des Betriebs der Antriebseinheit eines Kraftfahrzeuges.

Die erste Betriebszeit erstreckt sich (bevorzugt ausgehend von 0 kJ) insbesondere bis zu einem Energieeintrag von mindestens 50 kJ [Kilojoule], bevorzugt von mindestens 80 kJ oder mindestens 100 kJ.

Es wird ein Kraftfahrzeug vorgeschlagen, zumindest aufweisend eine Antriebseinheit (eine Verbrennungskraftmaschine und/oder eine elektrische Antriebseinheit, jeweils zum Antrieb des Kraftfahrzeugs), eine Kupplungseinrichtung sowie ein Steuergerät. Das Steuergerät ist zur Durchführung des hier beschriebenen Verfahrens geeignet bzw. kann das hier beschriebene Verfahren im Betrieb des Kraftfahrzeugs ausführen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Kraftfahrzeug;
- Fig. 2:: eine Kupplungseinrichtung;
- Fig. 3:: ein erstes Diagramm, in der die Betätigung eines Aktuators über dem Energieeintrag dargestellt ist; und
- Fig. 4:: ein zweites Diagramm, in der die Betätigung eines Aktuators über dem Energieeintrag sowie die unterschiedlichen Intervalle dargestellt sind.

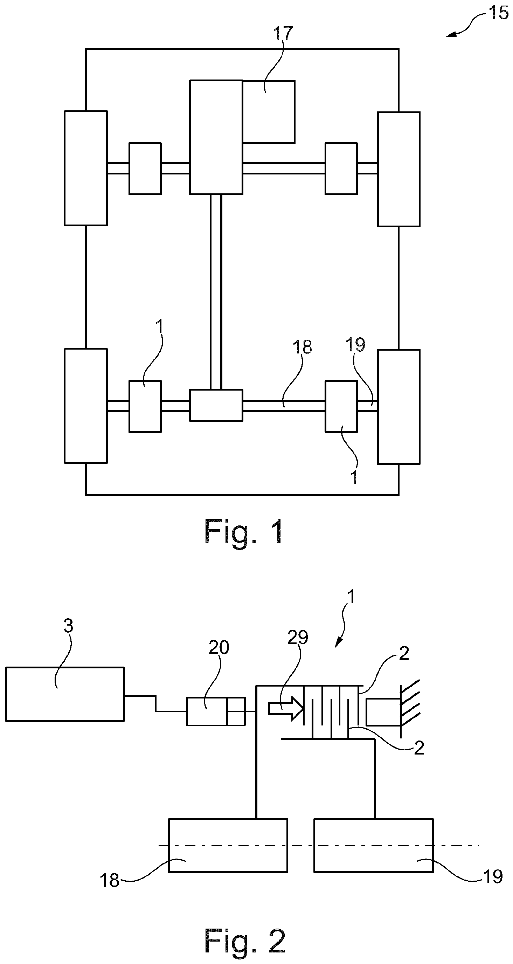

Fig. 1 zeigt ein Kraftfahrzeug 15 aufweisend eine Antriebseinheit 17 und eine an einer Achse des Kraftfahrzeuges angeordnete Kupplungseinrichtung 1, durch die eine Antriebswelle 18 mit einer Abtriebswelle 19 zur Übertragung eines Drehmoments von der Antriebseinheit 17 hin zum Rad steuerbar verbindbar ist.

Fig. 2 zeigt eine Kupplungseinrichtung 1, durch die eine Antriebswelle 18 mit einer Abtriebswelle 19 zur Übertragung eines Drehmoments steuerbar verbindbar ist. Die Kupplungslamellen 2 der Kupplungseinrichtung 1 werden über den Aktuator 20 zueinander hinbewegt und bilden zur Übertragung des Drehmoments eine reibschlüssige Verbindung. Der Aktuator 20 wird über das Steuergerät 3 betätigt.

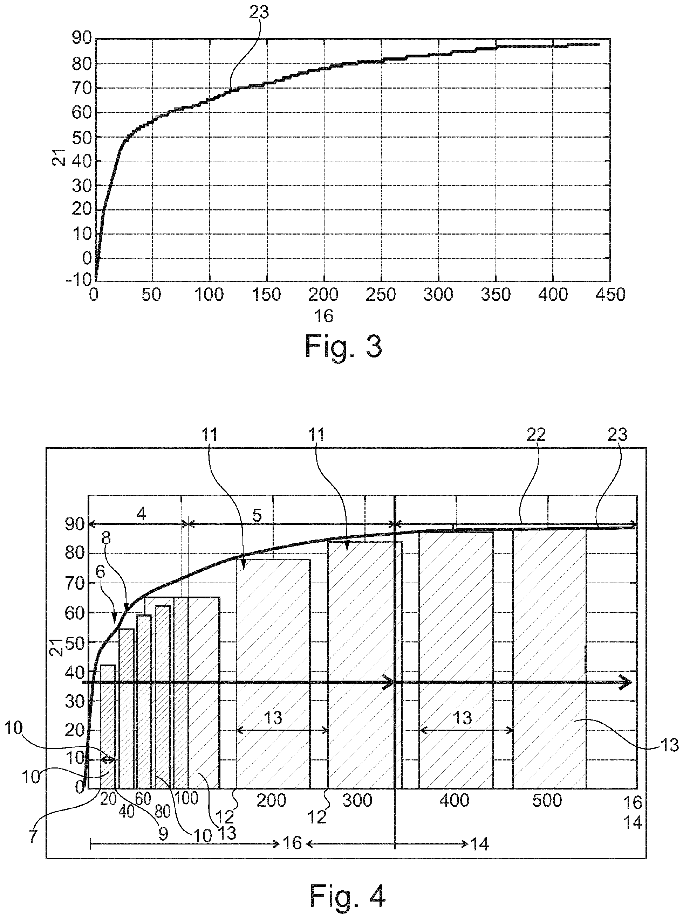

Fig. 3 zeigt ein erstes Diagramm, in dem die Betätigung eines (elektromechanischen) Aktuators 20, hier die Winkelinkremente 21 einer elektrisch angetriebenen Achse (vertikale Achse), über dem Energieeintrag 16 der Kupplungseinrichtung 1 (horizontale Achse) dargestellt ist. Die Kurve 23 zeigt die Verlagerung des Kisspoints in Abhängigkeit von dem Energieeintrag 16 in die Kupplungseinrichtung 1.

Erkennbar ist, dass nach einer Erstinbetriebnahme der Kupplungseinrichtung 1 ein deutliches Setzverhalten der Kupplungseinrichtung 1 eintritt, d. h. die Verlagerung des Kisspoints ist hier stärker als in späteren Phasen des Betriebs der Kupplungseinrichtung 1.

Fig. 4 zeigt (wie Fig. 3) ein zweites Diagramm, in der die Betätigung eines Aktuators 20 über dem Energieeintrag 16 bzw. der Laufleistung 14 (horizontale Achse) sowie die unterschiedlichen Intervalle 10, 13 dargestellt sind. Auch hier zeigt die Kurve 23 die Verlagerung des Kisspoints anhand der sich verändernden Winkelinkremente 21 (vertikale Achse).

Gemäß Schritt a) des Verfahrens wird eine erste Kalibrierung 6 zu einem ersten Zeitpunkt 7 und eine auf die erste Kalibrierung 6 folgende zweite Kalibrierung 8 zu einem zweiten Zeitpunkt 9 durchgeführt, wobei der erste Zeitpunkt 7 und der zweite Zeitpunkt 9 in einer ersten Betriebszeit 4 der Kupplungseinrichtung 2 liegen und innerhalb eines ersten 10 Intervalls erfolgen. Gemäß Schritt b) des Verfahrens wird mindestens eine dritte Kalibrierung 11 in einer späteren zweiten Betriebszeit 5 zu einem dritten Zeitpunkt 12 durchgeführt, wobei eine zu der dritten Kalibrierung 11 vorhergehende Kalibrierung 8, 11 innerhalb eines zweiten Intervalls 13 mit dem dritten Zeitpunkt 12 erfolgt. Die Intervalle 10, 13 werden (zunächst) in Abhängigkeit von einem Energieeintrag 16 in die Kupplungseinrichtung 1 (und die zweiten Intervalle 13 später in Abhängigkeit von einer Laufleistung 14 des Kraftfahrzeuges 15 bzw. der Kupplungseinrichtung 1) durch das Steuergerät 3 bestimmt, wobei die ersten Intervalle 10 kürzer sind als die zweiten Intervalle 13.

Vorliegend wird die Kalibrierung 6, 8 in einer ersten Betriebszeit 4 anders, nämlich mit einer erhöhten Wiederholfrequenz, ausgeführt als eine Kalibrierung 11 in einer sich an die erste Betriebszeit 4 anschließenden zweiten Betriebszeit 5 bzw. dritten Betriebszeit 22.

Die in der ersten Betriebszeit 4 durchgeführten ersten und zweiten Kalibrierungen 6, 8 werden in Kalibrierprozessen innerhalb von festgelegten ersten Intervallen 10 durchgeführt. Dabei werden die ersten Intervalle 10 ausschließlich in Abhängigkeit von einem Energieeintrag 16 in die Kupplungseinrichtung 1 bestimmt.

Die in der zweiten Betriebszeit 5 durchgeführten dritten Kalibrierungen 11 werden in Kalibrierprozessen innerhalb von festgelegten zweiten Intervallen 13 durchgeführt. Dabei werden auch die zweiten Intervalle 13 ausschließlich in Abhängigkeit von einem Energieeintrag 16 in die Kupplungseinrichtung 1 bestimmt.

Die ersten Intervalle 10 sind kleiner als die zweiten Intervalle 13

Die in der ersten Betriebszeit 4 liegenden ersten Intervalle 10 betragen ca. 20 kJ. Die in der zweiten Betriebszeit 5 liegenden zweiten Intervalle betragen ca. 100 kJ. Erkennbar kann durch die geringeren ersten Intervalle 10 das gerade in der ersten Betriebszeit 4 auftretende Setzverhalten besser kompensiert werden, so dass der sich verändernde Kisspoint der Kupplungseinrichtung 1 besser nachgeführt werden kann.

Das zweite Intervall 13 wird in der zweiten Betriebszeit 5 in Abhängigkeit von dem Energieeintrag 16 bestimmt. In einer sich an die zweite Betriebszeit 5 anschließenden dritten Betriebszeit 22 wird das zweite Intervall 13 in Abhängigkeit von der Laufleistung 14 bestimmt.

Die erste Betriebszeit 4 erstreckt sich ausgehend von 0 kJ bis zu einem Energieeintrag 16 von ca. 100 kJ. Die zweite Betriebszeit 5 schließt sich an die erste Betriebszeit 4 an und erstreckt sich bis zu einem Energieeintrag 16 von ungefähr 300 kJ. Die dritte Betriebszeit 22 schließt sich an die zweite Betriebszeit 5 an und erstreckt sich von da an bis zu einem Ende der Einsatzzeit der Kupplungseinrichtung 1.

### Bezugszeichenliste

- 1: Kupplungseinrichtung
- 2: Kupplungslamellen
- 3: Steuergerät
- 4: erste Betriebszeit
- 5: zweite Betriebszeit
- 6: erste Kalibrierung
- 7: erster Zeitpunkt
- 8: zweite Kalibrierung
- 9: zweiter Zeitpunkt
- 10: erstes Intervall
- 11: dritte Kalibrierung
- 12: dritter Zeitpunkt
- 13: zweites Intervall
- 14: Laufleistung
- 15: Kraftfahrzeug
- 16: Energieeintrag
- 17: Antriebseinheit
- 18: Antriebswelle
- 19: Abtriebswelle
- 20: Aktuator
- 21: Winkelinkremente
- 22: dritte Betriebszeit
- 23: Kurve

## Patentansprüche

1. Verfahren zum Betrieb einer Kupplungseinrichtung (1), wobei die Kupplungseinrichtung (1) zumindest eine Mehrzahl von miteinander in Reibkontakt stehenden Kupplungslamellen (2) sowie ein die Kupplungseinrichtung (1) steuerndes Steuergerät (3) aufweist, wobei die Kupplungseinrichtung (1) während einer Betriebszeit (4, 5) der Kupplungseinrichtung (1) mehrmals kalibriert wird; wobei das Verfahren zumindest die folgenden Schritte umfasst:
a) Durchführen einer ersten Kalibrierung (6) zu einem ersten Zeitpunkt (7) und Durchführen einer auf die erste Kalibrierung (6) folgenden zweiten Kalibrierung (8) zu einem zweiten Zeitpunkt (9), wobei der erste Zeitpunkt (7) und der zweite Zeitpunkt (9) in einer ersten Betriebszeit (4) der Kupplungseinrichtung (1) liegen und innerhalb eines ersten Intervalls (10) erfolgen; und
b) Durchführen mindestens einer dritten Kalibrierung (11) in einer späteren zweiten Betriebszeit (5) zu einem dritten Zeitpunkt (12), wobei eine zu der dritten Kalibrierung (11) vorhergehende Kalibrierung innerhalb eines zweiten Intervalls (13) mit dem dritten Zeitpunkt (12) erfolgt;
**dadurch gekennzeichnet, dass** die Intervalle (10, 13) in Abhängigkeit von einer Laufleistung (14) eines Kraftfahrzeugs (15) oder einem Energieeintrag (16) in die Kupplungseinrichtung (1) durch das Steuergerät (3) bestimmt werden, wobei das erste Intervall (10) kürzer ist als das zweite Intervall (13).

2. Verfahren nach Patentanspruch 1, wobei das erste Intervall (10) in Abhängigkeit von dem Energieeintrag (16) und das zweite Intervall (13) in Abhängigkeit von der Laufleistung (14) bestimmt wird.

3. Verfahren nach einem der vorhergehenden Patentansprüche, wobei in der ersten Betriebszeit (4) liegende erste Intervalle (10) in Abhängigkeit von dem Energieeintrag (16) bestimmt werden und weniger als 30 kJ [Kilojoule] betragen.

4. Verfahren nach einem der vorhergehenden Patentansprüche, wobei das zweite Intervall (13) in Abhängigkeit von dem Energieeintrag (16) bestimmbar ist, wobei das zweite Intervall (13) mindestens 50 kJ [Kilojoule] beträgt.

5. Verfahren nach einem der vorhergehenden Patentansprüche, wobei die Mehrzahl von Kupplungslamellen (2) durch Karbonlamellen gebildet ist.

6. Verfahren nach einem der vorhergehenden Patentansprüche, wobei zumindest in der ersten Betriebszeit (4) bei einer Anforderung zur Übertragung eines Soll-Moments über die Kupplungseinrichtung (1) ein Ist-Moment mit einer Abweichung gegenüber dem Soll-Moment von höchstens 10 % übertragen wird.

7. Verfahren nach einem der vorhergehenden Patentansprüche, wobei ein Setzverhalten der Kupplungseinrichtung (1) zumindest während der ersten Betriebszeit (4) in einem Versuchsfeld ermittelt wird durch Aufprägung von Energieeinträgen (16) und Ermittlung des sich in Abhängigkeit von dem Energieeintrag (16) ändernden Kisspoints der Kupplungseinrichtung (1); wobei der Zusammenhang von Energieeintrag (16) und Kisspoint in dem Steuergerät (3) hinterlegt sind; wobei der während der Betriebszeit (4, 5) der Kupplungseinrichtung (1) erfolgende Energieeintrag (16) durch das Steuergerät (3) ermittelt wird und zumindest das erste Intervall (10) in Abhängigkeit von dem ermittelten Energieeintrag (16) durch das Steuergerät (3) bestimmt wird.

8. Verfahren nach einem der vorhergehenden Patentansprüche, wobei, wenn ein erstes Intervall (10) oder ein zweites Intervall (13) überschritten wird, eine Kalibrierung unmittelbar nach einem Neustart einer Antriebseinheit (17) eines Kraftfahrzeuges (15) erfolgt.

9. Verfahren nach einem der vorhergehenden Patentansprüche 1 bis 8, wobei, wenn ein erstes Intervall (10) oder ein zweites Intervall (13) überschritten wird, eine Kalibrierung während der Betriebszeit (4, 5) einer Antriebseinheit (17) eines Kraftfahrzeuges (15) erfolgt.

10. Verfahren nach einem der vorhergehenden Patentansprüche, wobei sich die erste Betriebszeit (4) bis zu einem Energieeintrag (16) von mindestens 50 kJ [Kilojoule] erstreckt.

## Claims

1. Method for the operation of a clutch device (1), wherein the clutch device (1) has at least a plurality of clutch plates (2) in frictional contact with each other and a control device (3) controlling the clutch device (1), wherein the clutch device (1) is calibrated multiple times during an operating time (4, 5) of the clutch device (1); wherein the method at least includes the following steps:
a) Perform a first calibration (6) at a first point in time (7) and perform a second calibration (8) at a second point in time (9) following the first calibration (6), wherein the first point in time (7) and the second point in time (9) are within a first operating time (4) of the clutch device (1) and occur within a first interval (10); and
b) Perform at least a third calibration (11) in a later second operating time (5) at a third point in time (12), wherein a calibration preceding the third calibration (11) is carried out in a second interval (13) with the third point in time (12);
**characterized in that** the intervals (10, 13) are determined by the control unit (3) depending on a mileage (14) of a motor vehicle (15) or an energy input (16) into the clutch device (1), wherein the first interval (10) is shorter than the second interval (13).

2. Method as claimed in claim 1, wherein the first interval (10) is determined depending on the energy input (16) and the second interval (13) is determined depending on the mileage (14).

3. Method as claimed in any one of the preceding claims, wherein the first intervals (10) in the first operating time (4) are determined depending on the energy input (16) and amount to less than 30 kJ [kilojoules].

4. Method as claimed in any one of the preceding claims, wherein the second interval (13) can be determined depending on the energy input (16), wherein the second interval (13) amounts to at least 50 kJ [kilojoules].

5. Method as claimed in any one of the preceding claims, wherein the plurality of clutch plates (2) is formed by carbon plates.

6. Method according to any one of the preceding claims, wherein at least in the first operating time (4), in the case of a request for transmission of a target torque via the clutch device (1), an actual torque with a deviation relative to the target torque of not more than 10 % will be transferred.

7. Method as claimed in any one of the preceding claims, wherein a setting behavior of the clutch device (1) is determined at least during the first operating time (4) in a test field by applying energy inputs (16) and determining the changing kiss point of the clutch device (1) as a function of the energy input (16); wherein the relationship of the energy input (16) and the kiss point is stored in the control unit (3); wherein the energy input (16) carried out during the operating time (4, 5) of the clutch device (1) is determined by the control unit (3) and at least the first interval (10) is determined by the control unit (3) depending on the determined energy input (16) .

8. Method as claimed in any one of the preceding claims, wherein, if a first interval (10) or a second interval (13) is exceeded, a calibration is carried out immediately after a restart of a drive unit (17) of a motor vehicle (15).

9. Method as claimed in any one of the preceding claims 1 through 8, wherein if a first interval (10) or a second interval (13) is exceeded, a calibration is carried out during the operating time (4, 5) of a drive unit (17) of a motor vehicle (15).

10. Method as claimed in any one of the preceding claims, wherein the first operating time (4) extends to an energy input (16) of at least 50 kJ [kilojoules].

## Revendications

1. Procédé permettant de faire fonctionner un dispositif d'embrayage (1), le dispositif d'embrayage (1) comprenant au moins une pluralité de disques d'embrayage (2) en contact de friction les uns avec les autres ainsi qu'un appareil de commande (3) commandant le dispositif d'embrayage (1), le dispositif d'embrayage (1) étant étalonné plusieurs fois pendant une période de fonctionnement (4, 5) du dispositif d'embrayage (1) ; le procédé comportant au moins les étapes suivantes :
a) exécution d'un premier étalonnage (6) à un premier instant (7) et exécution d'un deuxième étalonnage (8) suivant le premier étalonnage (6) à un deuxième instant (9), le premier instant (7) et le deuxième instant (9) étant situés dans une première période de fonctionnement (4) du dispositif d'embrayage (1) et ayant lieu pendant un premier intervalle (10) ; et
b) exécution d'au moins un troisième étalonnage (11) pendant une deuxième période de fonctionnement (5) ultérieure à un troisième instant (12), un étalonnage précédant le troisième étalonnage (11) ayant lieu pendant un deuxième intervalle (13) comportant le troisième instant (12) ;
**caractérisé en ce que** les intervalles (10, 13) sont déterminés par l'appareil de commande (3) en fonction d'un kilométrage (14) d'un véhicule automobile (15) ou d'un apport d'énergie (16) dans le dispositif d'embrayage (1), le premier intervalle (10) étant plus court que le deuxième intervalle (13).

2. Procédé selon la revendication 1, dans lequel le premier intervalle (10) est déterminé en fonction de l'apport d'énergie (16) et le deuxième intervalle (13) est déterminé en fonction du kilométrage (14).

3. Procédé selon l'une des revendications précédentes, dans lequel des premiers intervalles (10) situés dans la première période de fonctionnement (4) sont déterminés en fonction de l'apport d'énergie (16) et valent moins de 30 kJ [kilojoules].

4. Procédé selon l'une des revendications précédentes, dans lequel le deuxième intervalle (13) peut être déterminé en fonction de l'apport d'énergie (16), dans lequel le deuxième intervalle (13) vaut au moins 50 kJ [kilojoules].

5. Procédé selon l'une des revendications précédentes, dans lequel la pluralité de disques d'embrayage (2) est formée par des disques en carbone.

6. Procédé selon l'une des revendications précédentes, dans lequel au moins pendant la première période de fonctionnement (4), en cas de demande de transmission d'un couple de consigne par le biais du dispositif d'embrayage (1), un couple réel est transmis avec un écart par rapport au couple de consigne de 10 % au maximum.

7. Procédé selon l'une des revendications précédentes, dans lequel un comportement nominal du dispositif d'embrayage (1) est déterminé au moins pendant la première période de fonctionnement (4) dans un terrain d'essais par application d'apports d'énergie (16) et détermination du point de contact du dispositif d'embrayage (1) changeant en fonction de l'apport d'énergie (16) ; dans lequel la relation de l'apport d'énergie (16) et du point de contact est enregistrée dans l'appareil de commande (3) ; dans lequel l'apport d'énergie (16) ayant lieu pendant la période de fonctionnement (4, 5) du dispositif d'embrayage (1) est déterminé par l'appareil de commande (3) et au moins le premier intervalle (10) est déterminé par l'appareil de commande (3) en fonction de l'apport d'énergie (16) déterminé.

8. Procédé selon l'une des revendications précédentes, dans lequel, lorsqu'un premier intervalle (10) ou un deuxième intervalle (13) est dépassé, un étalonnage a lieu immédiatement après un redémarrage d'une unité d'entraînement (17) d'un véhicule automobile (15).

9. Procédé selon l'une des revendications précédentes 1 à 8, dans lequel, lorsqu'un premier intervalle (10) ou un deuxième intervalle (13) est dépassé, un étalonnage a lieu pendant la période de fonctionnement (4, 5) d'une unité d'entraînement (17) d'un véhicule automobile (15).

10. Procédé selon l'une des revendications précédentes, dans lequel la première période de fonctionnement (4) s'étend jusqu'à un apport d'énergie (16) d'au moins 50 kJ [kilojoules].
